# EUROPEAN PATENT APPLICATION

(11) **EP 2 083 586 A1**
(43) Date of publication of application: **29.07.2009**
(21) Application number: 08001434.3
(22) Date of filing: 25.01.2008
(51) Int. Cl.: H04W 4/00

(54) **Method for controlling mobile access through the introduction of forbidden cell list**

(71) Applicant: Nokia Siemens Networks Oy, 02610 Espoo (FI)
(72) Inventor: De Benedittis, Rossella, 20137 Milano (IT); Marnoni, Luca, 21047 Saronno (VA) (IT); Pieroth, Mathias, 82205 Gilching (DE)
(74) Representative: Bruglachner, Thomas E.

(57) **Abstract**

Method for controlling access of a device (UE) to a transceiver entity (FAP) serving a cell (cell 1) of a cellular mobile telecommunication network (FAP,cell 1,UE),
wherein, after receiving at a transceiver entity (FAP) a message (REQUEST, RRC CONNECTION REQUEST) from the device, the message representing an attempt of the device (UE) to register,
it is checked whether the device (UE) has access rights to the transceiver entity (FAP),
wherein if the device (UE) has access rights registration of the device (UE) at the transceiver entity (FAP) will be permitted ("permitted")
wherein if the device (UE) has no access rights registration of the device (UE) at the tranceiver station (FAP) will be rejected ("Cell Access Restriction").

## Description

### Technical field of the invention

The invention relates to a method for controlling access of a device to a transceiver entity serving a cell of a cellular mobile telecommunication network, a device, a transceiver, a system and a memory device.

### Background of the invention

Currently UMTS radio networks are made up of a large set of macro-cells (e.g. UTRAN cells), mainly intended for external radio coverage. For each macro cell, parameters as transceiver location, transmission power, Location Area, capacity etc. are fully controlled and configured by the Mobile Network Operator (MNO) via O&M.

To improve indoor coverage to mobile operators, an application submitted to 3GPP, under investigation within Release 8 framework, with the name of *HomeNodeB* intends to carry the 3G radio coverage directly inside the customer's premises using so called home transceiver stations, below also named *Femto Cells* or *Femto Access Points* (FAP).

Home transceiver stations will be assigned to an end-user and directly installed in his home environment. FAPs will be generally connected to the transport network via a DSL WAN router, offering both mobile and fixed network services. As long as outside the home environment, the user receives services from the mobile network via macro cells. If the user stays at home, he receives the same, or better, services via his own FAP; since home transceiver stations are directly connected to the fixed line, services via femto cells can be offered by the MNO for much lower fees compared to access via macro cells.

As femto and macro cells use the same radio access technology, legacy mobile phones, originally intended for the macro coverage, should also be able to get services via femto cells.

The number of FAPs expected to be deployed will be extremely high (one per family if not more each user will be able to directly buy and install his own FAP. It is therefore practically impossible for the MNO to handle femto cells under a controlled radio planning. Very likely, FAP will directly derive its radio parameter configuration from its own radio measurements and from the measurements reported by the camped User Equipments (UE).
Each FAP should principally define a different Location Area, identifying the FAP owner premises. Yet, due to the limited number of available Location Area Codes (LAC), it is very likely that different FAPs will have assigned the same LAC, thus making impossible for the camped UEs to "recognise" their "home zone" by using LAC of the femto cell.

The FAP owner will be able to decide whether or not to (temporarily) open the access to his FAP to (a limited number of) other users. FAP access to authorised UEs will be referred to as Closed Access Control in the remainder of this document.

Currently available access control mechanisms for cellular networks as e.g. UTRAN are designed to grant access rights on network level, respectively on location area level. For femto cells, access control decision on cell level is required. Consequently existing mechanisms are not suitable for femto cells.

In addition, access control handling for femto cell has to minimize impact on the existing macro network.

The present invention provides a method for controlling the UEs access to a femto cell, minimising the impacts on the macro network and on the UEs.

The following types for management of access rights are currently known for UTRAN:
Registration procedure with the Core Network (CN) [3GPP TS 24.008]:
   - Upon first cell access in a location or routing area, the UE has to register with the network, i.e. it has to perform a registration procedure with the core network. Various parameters are used by the network to check if the UE has access rights. However, registration procedure does not take into account the information from which cell the registration request originates (this isn't even known to CN). The smallest "unit" seen by CN is the Location Area respectively the Routing Area, generally identifying the geographical area covered by a set of cells.
Cell Access Restrictions [3GPP TS 25.331]:
   - It is possible for UTRAN cell to broadcast Cell Access Restriction information. 16 different values are currently defined for 3GPP Release 6. A UE may access the cell only if it has fitting access class rights. However, enhancement of this concept to cover also Femto access rights seems not feasible since there will be many thousand Femto cells, each one potentially with another set of authorized users. It seems impossible to define a sufficient number of Access Classes in the Cell Access Restrictions information element to cover this requirement.

Proprietary solutions using the current 3GPP specifications: Femto system performs access control check based on Location Area Code (LAC): If the UE performs a registration attempt via a Femto cell, it is checked (using IMSI / MSISDN) if the subscriber has access rights for this location area. If not, then registration is rejected by the network in a way that causes the mobile to add the LAC to the list of forbidden location areas stored by the UE.
This approach has the big advantage that - once rejected by femto system - the UE won't repeat the registration attempt with a Femto cell using the same LAC, as long as the LAC is stored in the forbidden location area list.
Flooding of the network with useless registration attempts can therefore be avoided.
Unfortunately this approach has several weaknesses. The most important one is as follows:
Due to the large number of Femto cells and the limited code-space available for LAC, it is not possible to assign a different LAC for each Femto cell. This implies that there will be a large number of Femto cells throughout the mobile network using the same LAC. Let's consider the case two Femto cells (Fcell#1 and Fcell#2) are using the same LAC and a UE which has access rights only to Fcell#1 enters Fcell#2. To guarantee proper interworking with legacy procedures of the macro network, registration attempt in Fcell#2 must be accepted even though later on that UE cannot get any service in Fcell#2.
Tedious and not very user friendly implementation is required to resolve this case, as e.g. redirecting the camped UE to a macro cell as soon as it sends a service request via Fcell#2.
On the other hand, if the registration attempt would be rejected, according to the current 3GPP specifications [3GPP TS 25.304], the subscriber will add the LAC of the accessed femto cell (Fcell#2) to the "list of forbidden
LACs" so that, if later on it enters the coverage of its own femto cell (Fcell#1) having the same LAC, it will not try to camp on Fcell#1 and, eventually, it will not get any service at all.

So far 3GPP standard does not foresee any valuable cause which can forbid the UE to camp on a specific femto cell, without affecting its camping on another femto cell belonging to the same Location Area.
- Another proprietary solution would be that Femto system checks the UE identity (IMSI or TMSI or P-TMSI or IMEI) received e.g. in the RRC CONNECTION REQUEST message from the UE: if the subscriber has access rights to the selected femto cell, its request will be accepted otherwise it will be rejected, possibly redirecting the UE to another cell or system. But also this approach has weaknesses:
   - It is not known in advance which identity will be included by the UE in the RRC message; Femto system shall therefore have the list of all of them with the respective access rights. This means a considerable data base, to be kept updated.
   - It is not always possible to redirect the UE to another cell or system.
   - Even in the case that redirection to macro system is possible, it is very likely that the UE will repeat again and again its attempt to camp in femto cell because the femto cell still offers better quality. This will cause additional network load and reduce the UEs battery lifetime considerably.

### Summary of the invention

Therefore, it is an object of the present invention to overcome these shortcomings of the prior art. This is accomplished by what is set forth in the appended independent claims, while the appended dependent claims define advantageous modifications thereof.

Specifically, according to a first aspect of the present invention according to claim 1, there is provided a method for controlling access of a device to a transceiver entity serving a cell of a cellular mobile telecommunication network,
wherein, after receiving at a transceiver entity a message from the device, the message representing an attempt of the device to register, it is checked whether the device has access rights to the transceiver entity,
wherein if the device has access rights registration of the device at the transceiver entity will be permitted, wherein if the device has no access rights registration of the device at the transceiver station will be rejected using a new reject cause, wherein if registration of the device at the transceiver station is rejected with that new reject cause, the device stores an identification representing an identification of this cell in a list of cells for which access has been denied, wherein before attempting to register in a cell the device checks whether an identification of the cell is represented in the list of cells for which access has been denied stored in the device, wherein the device only attempts to register if an identification of the cell is not represented in the list stored in the device.

Preferably a further entity of a telecommunication network checks whether the device has access rights to the cell
wherein the further entity sends information indicating whether the device has access rights to the device either via the transceiver entity or without passing the transceiver entity via a cellular telecommunication network.

Preferably the transceiver entity checks whether the device has access rights to the cell.

Preferably it is checked whether the device (UE) has access rights to the transceiver entity (FAP) based on an identification (e.g. IMSI or TMSI or P-TMSI) of the device (UE), which identification is represented in the message.

Preferably the identification of the device (UE) is an IMSI.

Preferably a flag indicating whether the cell is a macro cell or a femto cell is transmitted via a broadcast channel of at least a femto cell transceiver entity,
wherein, at least or only, if the flag received by the device indicates it is sent by a femto cell transceiver entity, the device provides a specific identification (e.g. IMSI) of the device to the femto cell transceiver entity in a message representing an attempt of the device to register.

Preferably the message representing an attempt of the device to register represents an attempt of the device to register at the transceiver entity.

Preferably the list of cells for which access has been denied is stored in a memory inside the device, or in a memory outside part of the device and connectable to the device.

Preferably the identification of the cell is provided by an identification of the transceiver station serving the cell.

Preferably admitting the device to the transceiver entity of the cell comprises to allow receiving user data, especially voice data, from the device at the transceiver entity and the transceiver entity forwarding it to a further network, and receiving user data, especially voice data, via the further network at the transceiver entity and the transceiver entity forwarding it to the device.

Preferably the further network is a fixed network, especially broadband fixed network.

Preferably the transceiver entity is a cellular home transceiver station.

Preferably the cellular mobile telecommunication network comprises the transceiver entity sending and receiving information in an area defining the coverage of the cell and at least one device.

Preferably the cellular mobile telecommunication network comprises only the transceiver entity sending and transmitting information in an area defining the coverage of that cell and the at least one device admitted to that cell.

Preferably the transceiver entity stores a list of devices permitted to access this transceiver entity and wherein the transceiver entity permits only those devices stored in the list to access the transceiver entity, whereas it rejects all other devices.

Preferably emergency calls from any device are generally accepted by the transceiver entity.

According to a second aspect of the present invention, there is provided a device comprising a memory for storing a list of identifications of transceiver entities that have rejected access of the device to the transceiver entities, a decision unit for deciding to store in the memory an identification of transceiver entities that have rejected access of the device, and for deciding to send a message representing an attempt of the device to register to a transceiver entity if an identification of the transceiver entity is not represented in the list.

According to a third aspect of the present invention, there is provided an entity comprising a memory for storing a list of identifications of devices (UE) that are allowed to access a transceiver entity, a decision unit (processor) for deciding to grant access to a device requesting access and sending an identification which is stored in the list, and for deciding to deny access to a device requesting access and sending an identification which is not stored in the list.

According to a fourth aspect of the present invention, there is provided a system comprising a device and a transceiver entity.

According to a fifth aspect of the present invention, there is provided a memory device (e.g. CD, DVD, hard disk, memory stick etc) comprising code means adapted to produce the steps of any one of claims when loaded into the memory of a computer.

Other aspects, features and advantages of the present invention will become more fully apparent from the following detailed description of preferred embodiments thereof which is to be taken in conjunction with the appended drawings, in which:
Figure 1 depicts an architectural overview over an embodiment of the invention.
Figure 2 depicts a further architectural overview over a Femto system structure.

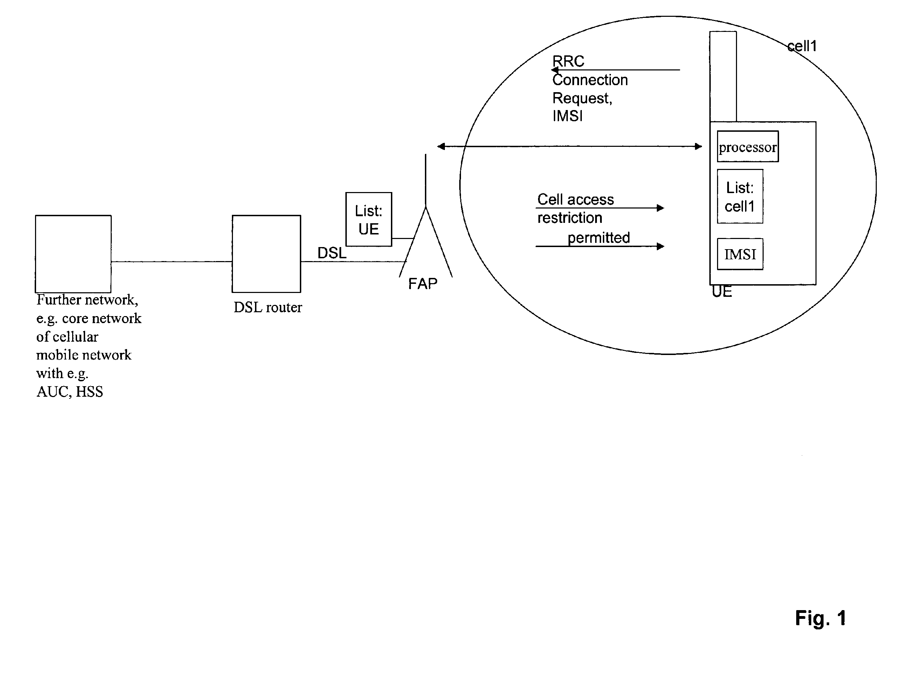

In Figure 1, a device UE of an end user is connected via an air interface (e.g. known 3G etc) with a FAP (which is a so called home transceiver station or Femto Cell or Femto Access Point FAP) which can carry e.g. 3G radio coverage directly inside an enduser's premises.

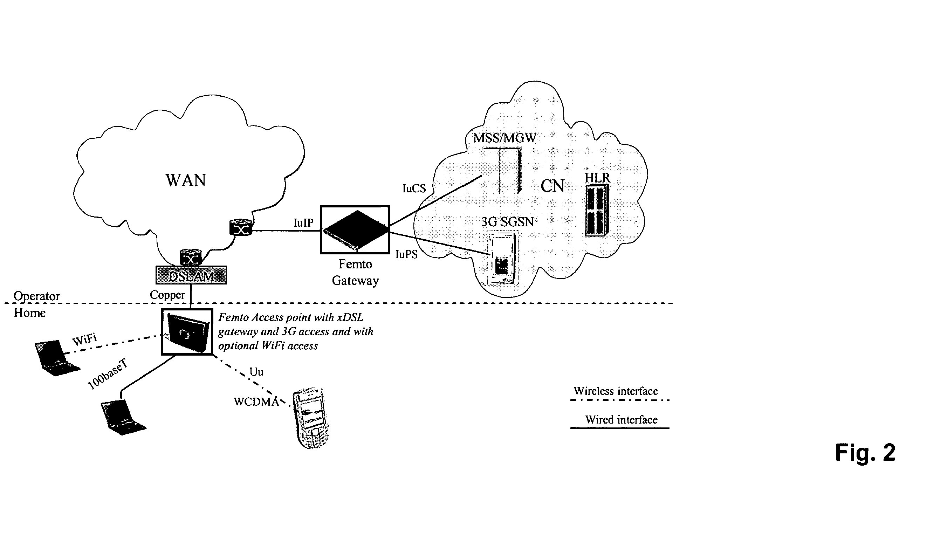

The home transceiver station FAP is connected by e.g. a fixed network as DSL etc with an other telecommunication network, e.g. with the core network of a cellular mobile telecommunication network in which the user UE is also registered as participant. The area of cell 1 is covered by a transceiver entity FAP, i.e. FAP can send and receive information to/from that area via the air.
A device UE checks whether an identification of the cell 1 (cell1- ID or FAP- ID etc) is represented in a list stored in the device UE, wherein the device UE only attempts to register at the transceiver entity FAP with a message (comprising a register attempt, e.g. RRC CONNECTION REQUEST including an identity IMSI etc of the device UE) if an identification of the cell 1 (ID of cell 1 or of FAP etc) is not represented in the list stored in the device UE.
Only devices UE the identification (IMSI etc) of which are stored (in a list in FAP or somewhere (FGW (Femtogateway described below regarding Fig.2)HSS/HLR/AAA) in a mobile or fixed telecommunication network) are allowed to access to the FAP.
If registration of the device UE at the transceiver station FAP is rejected with the new reject cause (rejection with a specific cause has to be assumed, since registration is also a legacy procedure), the device UE stores a cell identification or FAP identification in a list (Forbidden cell list),
wherein before attempting to register in a cell (cell 1) the device (UE) checks whether an identification of the cell (cell 1 or FAP) is represented in the forbidden cell list stored in the device (UE), wherein the device (UE) only attempts to register if an identification of the cell (cell 1 or FAP) is not represented in the forbidden cell list stored in the device (UE).

The invention comprises a proposal to solve closed access control problem for such cells (femto cells).

Two examples for solutions are presented in the following, one at Non Access Stratum (NAS) signalling level, the other at Access Stratum (AS) level:

**NAS solution:**
Upon first access attempt to a femto cell, the UE attempts to register with the network, following legacy handling of the macro system.
The network checks if the UE has access rights to the selected cell:
In case it has access rights, no change of legacy procedure is required. Registration will be successful.
In case the UE has no access rights, the registration is rejected with a new cause value, named here "Cell Access Restriction".
Receiving this cause value, the UE knows that it has no access rights to this specific cell and will store this information in a new list, named here "Forbidden Cell List". Handling of the "Forbidden Cell List" by the UE is performed in analogy to the already defined 3GPP "Forbidden LA List" as follows:
   The UE checks the "Forbidden Cell List" before camping on a cell and it will exclude all cells of this list as possible candidates for cell selection and re-selection. Apart from that the legacy mechanisms for cell selection and cell re-selection are applied (i.e. no further impact).

**AS solution** (Second example):
The AS approach is based on access control processing performed when UE sends RRC CONNECTION REQUEST to FAP.
The Femto cell shall check whether the UE has access rights based on the Initial UE Identity included in this message (e.g. IMSI, TMSI or P-TMSI): if not the request will be rejected with a new "Rejection cause" value, named here "Cell access restriction", otherwise it will be accepted.
If the UE receives an RRC CONNECTION REJECT message with "Rejection cause" value set to "Cell access restriction", it will add that cell to the new list "Forbidden cell list". Such new list will be handled by the UE as described above for the NAS based solution.
A further simplification would be that the UE shall always include the IMSI when sending the RRC CONNECTION REQUEST message to a femto cell. This will lead to a simplified data base in the Femto system, with a simplified maintenance (i.e. no need to consider other identities, no need to keep track of new TMSI or P-TMSI values assigned by the CN to the UEs).
   A "cell type" flag distributed via broadcast channel of the femto cell could be used by UE to distinguish femto from macro cells. Then - when accessing a femto cell - UE could always provide IMSI to the femto system.

For both NAS and AS solution, access for emergency calls is enabled in the following way:
- Access attempts with cause "Emergency Call" will always be accepted by the femto cell
- "Forbidden Cell List" restrictions will not be applied by UE in "Any Cell Selection" state (see TS 25.304 for more details).

Further implementation details:
- A Forbidden Cell List is introduced in UEs.
- Access Control check should be performed by femto system in order to avoid impact on legacy network. One possible approach for femto system embedded in UMTS network is as follows:

o Femto system has internally a list of UEs which are authorized to use a specific FAP.
   Femto system (FAP or a component of a mobile network) may identify those subscribers by their MSISDN or IMSI or (P-)TMSI.
o In case access control check reveals that a UE has access rights to a specific FAP, legacy procedures with CN run without impacts by femto system.
o In case access control check reveals that a UEe has no access rights to a specific FAP, femto system will reject the UE request, either for registration or for RRC connection depending on the selected solution, using the new release cause "Cell Access Restriction".
o UEs shall react upon this case, adding the accessed cell to the "forbidden cell list", thus excluding it as possible candidate for subsequent cell selections or re-reselections.

### Details about 3 GPP standard:

### NAS solution:

**TS 24.008:**
- Add new value, e.g. "Cell Access Restriction", to the relevant Information Element (IE) in the following messages:
   - LOCATION UPDATING REJECT (IE "Reject cause")
   - ATTACH REJECT (IE "GMM Cause")
   - ROUTING AREA UPDATE REJECT (IE "GMM Cause")
   Adding the description when the procedure is rejected with the new cause "Cell Access Restriction" and how the UE adds the accessed cell to the "List of forbidden Cells" as well as how this list is handled to the following clauses:
   - 4.4.1 Location Updating procedure
   - 4.7.3 GPRS Attach procedure
   - 4.7.5 Routing Area Update procedure

### AS solution:

**TS 25.331:**
- Add new value, e.g. "Cell Access Restriction", to the "Rejection cause" IE in the following message:
   - RRC CONNECTION REJECT

Adding the description when the procedure is rejected with the new cause "Cell Access Restriction" and the UE adds the accessed cell to the "List of forbidden Cells" as well as how this list is handled to the clause "8.1.3.9 Reception of an RRC CONNECTION REJECT message from the UE".

### NAS & AS solutions:

**TS 25.304:**
- Add the "List of forbidden cells" and description of its handling in the following clauses:
   - 4.2 Functional division between AS and NAS in idle mode
   - 4.3 Service type in Idle and Connected Mode
   - 5.2 Cell Selection and reselection in idle mode
   - 5.2.6.1.3 Highest ranked cells with cell reservations, access restrictions or unsuitable for normal camping

Advantages of the approach:
- Access control handling can be performed by network per cell, i.e. UE gets access only to those cells for which it really has service access rights.
- Legacy procedures of macro system (e.g. Location Updating, Routing Area Update, Attach or PAGING) are not impacted.
- Handling is very flexible and suitable for an arbitrary number of femto cells without additional load of radio interface.
- Unnecessary registration attempts in Femto cells are avoided.
- Implementation for UEs is simple; mechanism is in analogy to available "forbidden LA list".

NAS based solution is more suited for a network centric approach of the femto system, like the one defined in 3GPP Release 8, where the femto system also terminates the NAS procedures. Besides, access denial is done at the protocol layer, mobility management, expressly devoted to such procedures.

AS based solution instead more suites to a radio centric approach, where the Femto system implements up to the layer 3. Main advantage with respect to the NAS based solution is that the non authorised user is stopped fairly in advance without involvement of MM messages, minimising the exchanged signalling; drawback is that the mobility procedures are handled at a protocol layer, RRC, originally not intended for that.

Fig. 2 exemplarily shows a Femto system structure with mobile devices communicating over an air interface with a Femto access point (=FAP), which FAP is connected to a DSLAM via e.g. a copper wire. The DSLAM is connected here via an IuIP interface to a Femto Gateway FGW, which is connected via a IuPS interface e.g. to a 3G SGSN and via a IuCS interface to a MSS/MGW. Moreover Figure 2 shows a home location register HLR in the core network CN of a cellular mobile telecommunication network which HLR can support authentication procedures for authentication etc of mobile devices (also if they are connected via a FAP as in Fig. 2).

What has been described above is what is presently considered to be a preferred embodiment of the present invention. However, as is apparent to the skilled reader, it is provided for illustrative purposes only and is in no way intended to that the present invention is restricted thereto. Rather, it is the intention that all variations and modifications be included which fall within the spirit and scope of the appended claims.

## Claims

1. Method for controlling access of a device (UE) to a transceiver entity (FAP) serving a cell (cell 1) of a cellular mobile telecommunication network (FAP, cell 1, UE),
wherein, after receiving at the transceiver entity (FAP) a message (REQUEST, RRC CONNECTION REQUEST) from the device (UE), the message representing an attempt of the device (UE) to register,
it is checked whether the device (UE) has access rights to the transceiver entity (FAP),
wherein if the device (UE) has access rights, registration of the device (UE) for the transceiver entity (FAP) will be permitted ("permitted")
wherein if the device (UE) has no access rights registration of the device (UE) for the transceiver station (FAP) will be rejected ("Cell Access Restriction"),
wherein if registration of the device (UE) for the (cell 1) transceiver station (FAP) is rejected, the device (UE) stores an identification representing an identification of this cell (cell 1; FAP) in a list of cells for which access of the device (UE) has been denied (forbidden cell list),
wherein before attempting to register in a cell (cell 1) the device (UE) checks whether an identification of the cell (cell 1, FAP) is represented in the list stored in the device (UE), wherein the device (UE) only attempts to register if an identification of the cell (cell 1, FAP) is not represented in the list stored in the device (UE).

2. Method according to any of the preceding claims,
wherein (NAS solution) a further entity (FGW, AAA, AUC, HSS/HLR) of a telecommunication network (DSL, MN) checks whether the device (UE) has access rights to the cell (cell 1) wherein the further entity sends information indicating whether the device (UE) has access rights to the device (UE) either via the transceiver entity (FAP) or without passing the transceiver entity (FAP) via a cellular telecommunication network.

3. Method (AS solution) according to any of the preceding claims, wherein the transceiver entity (FAP) checks whether the device (UE) has access rights to the cell (cell 1).

4. Method according to any of the preceding claims,
wherein it is checked whether the device (UE) has access rights to the transceiver entity (FAP) based on an identification (e.g. IMSI or TMSI or P-TMSI) of the device (UE), which identification is represented in the message.

5. Method according to any of the preceding claims, wherein the identification of the device (UE) is an IMSI.

6. Method according to any of the preceding claims, wherein a flag indicating whether the cell is a macro cell or a femto cell is transmitted via a broadcast channel of at least a femto cell transceiver entity (FAP),
wherein, at least or only, if the flag received by the device indicates it is sent by a femto cell transceiver entity, the device (UE) provides identification (IMSI) of the device (UE) to the femto cell transceiver entity (FAP) in a message (RRC CONNECTION REQUEST) representing an attempt of the device (UE) to register.

7. Method according to any of the preceding claims,
wherein the message representing an attempt of the device (UE) to register represents an attempt of the device (UE) to register at the transceiver entity (FAP).

8. Method according to any of the preceding claims,
wherein the list of cells for which access of the device (UE) has been deniedis stored in a memory inside the device (UE), or in a memory outside part of the device and connectable to the device (UE).

9. Method according to any of the preceding claims,
wherein the identification of the cell (cell 1) is provided by an identification of the transceiver station (FAP) serving the cell.

10. Method according to any of the preceding claims,
wherein admitting the device (UE) to the transceiver entity (FAP) of the cell (cell 1) comprises to allow receiving user data, especially voice data, from the device (UE) at the transceiver entity (FAP) and the transceiver entity (FAP) forwarding it to a further network (DSL),
and receiving user data, especially voice data, via the further network (DSL) at the transceiver entity (FAP) and the transceiver entity forwarding it to the device (UE).

11. Method according to any of the preceding claims, wherein the further network is a fixed network, especially broadband fixed network (DSL).

12. Method according to any of the preceding claims, wherein the transceiver entity is a cellular home transceiver station (FAP).

13. Method according to any of the preceding claims, wherein the cellular mobile telecommunication network named in claim 1 comprises the transceiver entity (FAP) sending and receiving information in an area defining the coverage of the cell (cell 1) and at least one device (UE).

14. Method according to any of the preceding claims, wherein the cellular mobile telecommunication network comprises only the transceiver entity (FAP) sending and transmitting information in an area defining the coverage of that cell (cell 1) and the at least one device (UE) admitted to that cell (FAP).

15. Method according to any of the preceding claims, wherein the transceiver entity (FAP) stores a list (FAP list) of devices (UE) permitted to access this transceiver entity (FAP) and wherein the transceiver entity (FAP) permits only those devices stored in the list to access the transceiver entity, whereas it rejects ("cell access restriction") all other devices (UE).

16. Device (UE) comprising
- a memory for storing a list of identifications of transceiver entities (FAP, cell1) for which ("Cell Access Restriction") access of the device to the transceiver entities (FAP) was rejected,
- a decision unit (processor) for deciding to store in the memory an identification of transceiver entities (FAP) that have rejected ("Cell Access Restriction") access of the device,
and for deciding to send a message (RRC CONNECTION REQUEST) representing an attempt of the device (UE) to register to a transceiver entity (FAP) only if an identification (FAP, cell1) of the transceiver entity (FAP) is not represented in the list.

17. Device according to claim 16,
wherein, at least or only, if a flag received by the device over a broadcast channel from the transceiver device (FAP) indicates that it is sent by a femto cell transceiver entity, the device (UE) provides identification (IMSI) of the device (UE) to the femto cell transceiver entity (FAP) in a message (RRC CONNECTION REQUEST) representing an attempt of the device (UE) to access the femto cell.

18. Entity (FGW,AAA/HSS/AUC or FAP) comprising
- a memory for storing a list (FAP list) of identifications of devices (UE) that are allowed to access the transceiver entity (FAP),
- a decision unit (processor) for deciding to grant access to a device (UE) requesting access and sending an identification (IMSI) of the device which identification is stored in the list (FAP list),
and for deciding to deny ("Cell Access Restriction") access to a device (UE) requesting access and sending an identification which is not stored in the list (FAP list) or sending no identification.

19. Entity according to any of the claim 18, wherein the entity is the transceiver entity (FAP).

20. Entity according to any of the claims 18-19,
wherein the entity is an entity of a telecommunication network and wherein the entity sends the results of what it decided to the transceiver entity (FAP) and /or to the device (UE).

21. Entity according to any of the claims 18-20,
wherein (NAS solution) a further entity (FGW, AAA, AUC, HSS/HLR) of a telecommunication network (DSL, MN) checks whether the device (UE) has access rights to the cell (cell 1) wherein the further entity sends information indicating whether the device (UE) has access rights to the cell (cell1) either via the transceiver entity (FAP) or without passing the transceiver entity (FAP) via a cellular telecommunication network.

22. Entity according to any of the claims 18-21,
wherein the transceiver entity (FAP) checks whether the device (UE) has access rights to the cell (cell 1).

23. Entity according to any of the claims 18-22,
wherein it is checked whether the device (UE) has access rights to the transceiver entity (FAP) based on an identification (e.g. IMSI or TMSI or P-TMSI) of the device (UE), which identification is represented in the message.

24. Entity according to any of the claims 18-23,
wherein the identification of the device (UE) is an IMSI.

25. Entity according to any of the claims 18-24, designed to transmit a flag indicating whether the cell is a macro cell or a femto cell via a broadcast channel of the femto cell transceiver entity (FAP),

26. Entity according to any of the claims 18-25,
wherein the message representing an attempt of the device (UE) to register represents an attempt of the device (UE) to register at the transceiver entity (FAP).

27. Entity according to any of the claims 18-26,
wherein admitting the device (UE) to the transceiver entity (FAP) of the cell (cell 1) comprises
- allowing to receive user data, especially voice data, from the device (UE) at the transceiver entity (FAP), the transceiver entity (FAP) forwarding it to a further network (DSL),
- and receiving user data, especially voice data, via the further network (DSL) at the transceiver entity (FAP) and the transceiver entity forwarding it to the device (UE).

28. Entity according to any of the claims 18-27,
wherein the further network connected to the entity is a fixed network, especially broadband fixed network (DSL).

29. Entity according to any of the claims 18-28, wherein the transceiver entity is a cellular home transceiver station (FAP).

30. Entity according to any of the claims 18-29, wherein it (FAP) comprises a memory for a list (FAP list) of devices (UE) permitted to access this transceiver entity (FAP) and wherein the transceiver entity (FAP) is designed to permit only those devices stored in the list access to the transceiver entity, whereas it is designed to reject ("cell access restriction") all other devices (UE).

31. System comprising a device (UE) and a transceiver entity (FAP) according to any of the preceding claims.

32. System according to claim 31, wherein it comprises only the transceiver entity (FAP) sending and transmitting information in an area defining the coverage of a cell (cell 1) and at least one device (UE) admitted to that cell (FAP).

33. Memory device comprising stored code means adapted to produce the steps of any one of claims 1-15 when loaded into the memory of a computer.
